# FASCICULE DE BREVET EUROPEEN

(11) **EP 3 172 274 B1**
(45) Date de publication et mention de la délivrance du brevet: **31.05.2023**
(21) Numéro de dépôt: 15753726.7
(22) Date de dépôt: 22.07.2015
(51) Int. Cl.: C08K 5/14, C08L 23/00, H01B 3/00

(54) **UTILISATION DES MÉLANGES DES PEROXYDES MONOPEROXYCARBONATE POUR LA RÉTICULATION ET COMPOSITION DE POLYMÈRES RÉTICULABLES**
VERWENDUNG VON MONOPEROXYCARBONAT- PEROXID GEMISCHEN ZUM VERNETZEN UND ZUSAMMENSETZUNGEN VON VERNETZBAREN POLYMEREN
USE OF MIXTURES OF MONOPEROXYCARBONATE PEROXIDES FOR CROSSLINKING AND COMPOSITIONS OF CROSSLINKABLE POLYMERS

(30) Priorité: 25.07.2014 FR 1457184
(43) Date de publication de la demande: 31.05.2017
(73) Titulaire: Arkema France, 92700 Colombes (FR)
(72) Inventeur: DEFRANCISCI, Alfredo, 69003 Lyon (FR); LU, Chao, Changshu Jiangsu 215522 (CN)
(74) Mandataire: Arkema Patent
(86) Numéro de dépôt international: PCT/FR2015/052016
(87) Numéro de publication internationale: WO 2016/012718

(56) Documents cités:
- WO-A1-2011/020760
- WO-A1-2011/067505
- US-A- 3 344 126
- DATABASE WPI Week 201225 Thomson Scientific, London, GB; AN 2012-D84986 XP002737444, -& JP 2012 069866 A (SEKISUI CHEM IND CO LTD) 5 avril 2012 (2012-04-05)
- DATABASE WPI Week 201373 Thomson Scientific, London, GB; AN 2013-S70670 XP002737445, -& JP 2013 221145 A (NIPPON OILS & FATS CO LTD) 28 octobre 2013 (2013-10-28)
- DATABASE WPI Week 198015 Thomson Scientific, London, GB; AN 1980-26085C XP002737446, & JP S55 27328 A (NIPPON KASEI KK) 27 février 1980 (1980-02-27)

## Description

### Domaine de l'invention

La présente invention porte sur l'utilisation d'un peroxyde spécifique, ainsi qu'un mélange de peroxydes incluant ce peroxyde spécifique, pour la réticulation d'un homopolymère ou copolymère de l'éthylène et en particulier le copolymère ethylène-acétate de vinyle (EVA) ou un mélange de l'EVA avec un autre homo- ou copolymère de l'éthylène. La présente invention porte également sur une composition réticulable comprenant un homopolymère ou copolymère de l'éthylène et en particulier le copolymère ethylène-acétate de vinyle (EVA) et ce peroxyde spécifique ou le susdit mélange de peroxydes. La présente invention porte encore sur un procédé de réticulation de homopolymère ou copolymère de l'éthylène et en particulier le copolymère ethylène-acétate de vinyle (EVA).

### Etat de l'art

Il est connu de réticuler les homopolymères ou copolymères de l'éthylène et en particulier le copolymère ethylène-acétate de vinyle (EVA) en mettant ces derniers en présence de peroxydes initiateurs de radicaux libres tels que le OO-tert-butyle O-(2-éthylhexyle) monoperoxycarbonate. Ce peroxyde OO-tert-butyle O-(2-éthylhexyle) monoperoxycarbonate est fabriqué et vendu par la demanderesse sous l'appellation Luperox^{®} TBEC.

Dans certaines applications, notamment la production de films encapsulant des composants électriques de modules photovoltaïques (panneaux solaires), il est absolument essentiel que le film réticulé offre une résistivité électrique maximale afin d'isoler totalement les circuits électriques de l'environnement.

Dans une telle application (encapsulants de modules photovoltaïques), l'EVA est très couramment utilisé et représente une part majoritaire du marché à l'heure actuelle. L'EVA est nécessairement réticulé afin qu'il acquière en particulier les propriétés thermomécaniques satisfaisantes pour cette application. En effet, il est important, lors d'un procédé de réticulation d'un copolymère éthylène-acétate de vinyle (EVA) de conserver une bonne densité de réticulation. En effet, la densité de réticulation est une indication des propriétés mécaniques du produit fini. Ainsi, si la densité de réticulation est trop faible, le produit fini peut être caractérisé par une résistance à la rupture et une résistance à la déchirure médiocre, voire insuffisante.

Or, la réticulation de l'EVA par le OO-tert-butyle O-(2-éthylhexyle) monoperoxycarbonate, classiquement réalisé à l'heure actuelle, a pour conséquence que le polymère réticulé présente des propriétés d'isolation électrique non satisfaisante.

Par ailleurs, les temps de réticulation, notamment de l'EVA, obtenus par de tels procédés utilisant le OO-tert-butyle O-(2-éthylhexyle) monoperoxycarbonate sont relativement longs. Il s'ensuit une perte de productivité pour les industries transformant ces élastomères en produits finis.

Enfin, la quantité de peroxyde nécessaires à cette réticulation est un facteur important, non seulement au regard du coût du peroxyde en tant que tels mais également du fait des produits de dégradation qui résultent forcément d'un processus de réticulation.

Considérant en particulier toutes les caractéristiques susvisées et les inconvénients ou faiblesses propres au OO-tert-butyle O-(2-éthylhexyle) monoperoxycarbonate comme agent de réticulation de compositions réticulables de polymères élastomères tels que des copolymères éthylène-acétate de vinyle (EVA), il existe un réel besoin de trouver un agent de réticulation de substitution, seul ou en mélange.

On connaît également les documents US 3344126, JP 2012069866, WO 2011/020760 et WO 2011/067505 qui divulgue tous l'utilisation d'un peroxyde particulier, le OO-tert-butyle O-isopropyle monoperoxycarbonate (TBIC), pour la réticulation de polymère ou copolymère d'éthylène.

Son efficacité est certes intéressant mais il a été découvert par la demanderesse qu'en choisissant de le combiner avec un autre peroxyde d'un type particulier, dans un rapport bien spécifique, il s'opère une synergie tout à fait remarquable.

### Brève description de l'invention

La demanderesse a maintenant découvert de façon surprenante qu'en utilisant un peroxyde de la même famille que le OO-tert-butyle 0-(2-éthylhexyle) monoperoxycarbonate, en combinaison avec un peroxyde organique particulier choisi parmi le TBEC (OO-tert-butyle-O-2-éthyle hexyle monoperoxycarbonate) ou le TAEC (OO-tert-amyl-O-2ethyle hexyle monoperoxycarbonate), les inconvénients de ce dernier étaient résolues et qu'en outre des améliorations très significatives étaient atteintes concernant certaines caractéristiques additionnelles.

Ce résultat est d'autant plus surprenant que l'agent de réticulation présente une seule ramification R différente du peroxyde OO-tert-butyle O-(2-éthylhexyle) monoperoxycarbonate classiquement utilisé, à savoir la ramification R présentée ci-dessous :

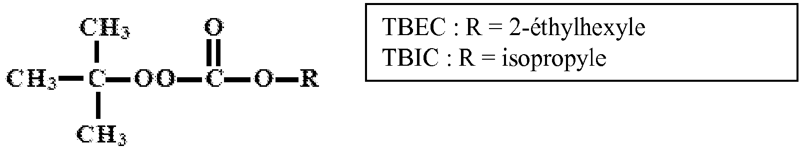

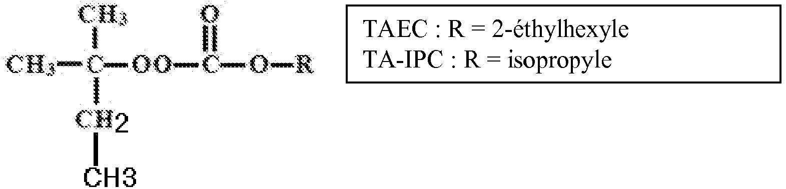

Le peroxyde découvert par la demanderesse pour l'application particulière de la réticulation des polymères incluant de l'EVA est le OO-tert-butyle O-isopropyle monoperoxycarbonate de sorte que le groupement R susvisé est le suivant :

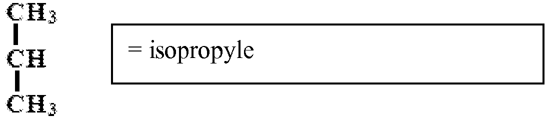

Dans le cas du OO-tert-butyle O-(2-éthylhexyle) monoperoxycarbonate, le radical R se présente comme suit :

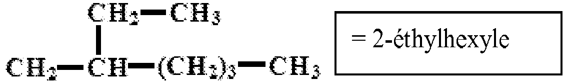

Il n'était donc en rien évident pour l'homme du métier d'envisager que deux peroxydes si proche structurellement puissent présenter, dans la réticulation des polymères fonctionnels et en particulier de l'EVA, des propriétés/qualités si différentes, au bénéfice du OO-tert-butyle O-isopropyle monoperoxycarbonate ou OO-tert-amyl O-isopropyl monoperoxycarbonate

Ainsi, la présente invention concerne de peroxyde(s) pour la réticulation d'au moins un polymère, ledit polymère consistant en un homopolymère ou copolymère de l'éthylène et en particulier le copolymère ethylène-acétate de vinyle (EVA) ou un mélange de l'EVA avec un autre homo- ou copolymère de l'éthylène, caractérisée en ce que le peroxyde comprend du OO-tert-butyle O-isopropyle monoperoxycarbonate (TBIC) ou OO-tert-amyl O-isopropyl monoperoxycarbonate (TA-IPC) ainsi que du OO-tert-butyle-O-2-éthyle hexyle monoperoxycarbonate (TBEC) ou du OO-tert-amyl-O-2ethyle hexyle monoperoxycarbonate (TAEC).

Dans la suite, l'invention est présentée en lien avec le TBIC car ce composant est disponible commercialement. Néanmoins, les expérimentations ont également été menées avec le TA-IPC et la demanderesse a constaté, pour ce dernier, des résultats en laboratoire et propriétés au moins aussi satisfaisantes qu'avec le TBIC.

Selon une possibilité offerte par l'invention, les seuls peroxydes utilisés pour la réticulation sont les deux peroxydes susvisés et leurs combinaisons. Ainsi, dans ce cas, le peroxyde consiste en un mélange de OO-tert-butyle O-isopropyle monoperoxycarbonate et de OO-tert-butyle-O-2-éthyl hexyle monoperoxycarbonate ou de OO-tert-amyl-O-2ethyle hexyle monoperoxycarbonate (mélange « TBIC + TBEC » ou « TBIC + TAEC »), ou OO-tert-amyl O-isopropyl monoperoxycarbonate et de OO-tert-butyle-O-2-éthyl hexyle monoperoxycarbonate ou de OO-tert-amyl-O-2ethyle hexyle monoperoxycarbonate (mélange « TA-IPC + TBEC » ou « TA-IPC + TAEC »), dans un rapport massique de 40%-60% à 60%-40% de ces deux peroxydes formant ledit mélange, et de façon encore plus préférentielle dans un rapport massique de 45%-55% à 55%-45% de ces deux peroxydes formant ledit mélange.

Avantageusement, le OO-tert-butyle O-isopropyle monoperoxycarbonate ou OO-tert-amyl O-isopropyl monoperoxycarbonate se présente sous forme dilué, de préférence présent en quantité supérieure à 50% dans la dilution, de façon encore plus préférée présent en quantité supérieure à 60% dans la dilution.

Dans la suite, par facilité, le OO-tert-butyle O-(2-éthylhexyle) monoperoxycarbonate sera souvent désigné par l'abréviation TBEC tandis que le OO-tert-butyle O-isopropyle monoperoxycarbonate sera désigné par l'abréviation TBIC. On note que cette facilité d'écriture s'applique également pour le TA-IPC et le TAEC.

Un autre aspect de la présente invention porte sur une composition réticulable comprenant au moins un copolymère éthylène-acétate de vinyle (EVA) et au moins un peroxyde, caractérisée en ce que le peroxyde consiste en du OO-tert-butyle O-isopropyle monoperoxycarbonate ou du OO-tert-amyl O-isopropyl monoperoxycarbonate ainsi que du OO-tert-butyle-O-2-éthyle hexyle monoperoxycarbonate ou du OO-tert-amyl-O-2ethyle hexyle monoperxoycarbonate dans un rapport massique de 40%-60% à 60%-40% de ces deux peroxydes, et de façon encore plus préférentielle dans un rapport massique de 45%-55% à 55%-45% de ces deux peroxydes..

D'autres caractéristiques avantageuses de l'invention sont précisées dans la suite :
- selon une possibilité offerte par l'invention, le peroxyde consiste en un mélange de OO-tert-butyle O-isopropyle monoperoxycarbonate et de OO-tert-amyl-O-2-éthyle hexyle monoperoxycarbonate (TBIC + TBEC) ou OO-tert-amyl-O-2ethyle hexyle monoperoxycarbonate (TBIC + TAEC), ou OO-tert-amyl O-isopropyl monoperoxycarbonate et de OO-tert-butyle-O-2-éthyl hexyle monoperoxycarbonate ou de OO-tert-amyl-O-2ethyle hexyle monoperoxycarbonate (mélange « TA-IPC + TBEC » ou « TA-IPC + TAEC »), dans un rapport de 40% à 60% de ces deux peroxydes formant ledit mélange, de façon encore préférentielle dans un rapport de 45% à 55% de ces deux peroxydes formant ledit mélange ;
- le mélange de peroxydes représente entre 0,2% et 4%, de préférence entre 0,5% et 2,5%, de la quantité massique du polymère présent dans ladite composition ;
- de préférence, le susdit copolymère éthylène-acétate de vinyle (EVA) est présent dans ladite composition à une teneur allant de 70 à 99,9%, de préférence de 97 à 99%, en poids, par rapport au poids de la composition ;
- selon une possibilité offerte par l'invention, en fonction des applications retenues pour le polymère réticulé, la composition comprend en outre un ou plusieurs coagents, ou promoteurs, de réticulation. Comme promoteur de réticulation de type aromatique multi-substitué, on peut citer le divinylbenzene,
le diisopropenyl benzene, l'alpha methylstyrène, l'alpha-methylstyrene dimère et le trimellitate de triallyle. Comme promoteur de réticulation à base de méthacrylate multi-substitué, on peut citer l'ethylene glycol dimethacrylate, phenylene dimethacrylate, diethylene glycol dimethacrylate, triethylene glycol dimethacrylate, tetraethylene glycol dimethacrylate, le polyethylene glycol 200 dimethacrylate, polyethylene glycol 400 dimethacrylate, 1,3-butanediol dimethacrylate, 1,4-butanediol dimethacrylate, 1,6-hexanediol dimethacrylate, 1,12-dodecanediol dimethacrylate, 1,3-glycerol dimethacrylate, diurethane dimethacrylate et le trimethylolpropane trimethacrylate. Le promoteur de réticulation à base de méthacrylate multi-substitué est avantageusement utilisé, en particulier l'éthylène glycol dimethacrylate et le trimethylolpropane trimethacrylate. Comme promoteur de réticulation à base d'acrylate multi-substitué, on peut citer 5 le bisphenol A epoxy diacrylate, dipropylene glycol diacrylate, tripropylene glycol diacrylate, polyethylene glycol 600 diacrylate, ethylene glycol diacrylate, diethylene glycol diacrylate, triethylene glycol diacrylate, tetraethylene glycol diacrylate, neopentyl glycol ethoxylate diacrylate, butanediol diacrylate, hexanediol diacrylate, aliphatic urethane diacrylate, trimethylolpropane triacrylate, trimethylolpropane ethoxylate triacrylate, trimethylolpropane propoxylate triacrylate, glycerol propoxylate triacrylate, aliphatic urethane triacrylate, trimethylolpropane triacrylate et dipentaerythritol pentaacrylate. Comme promoteur de réticulation azotés, on peut citer le cyanurate de triallyle (TAC), l'isocyanurate de triallyle (TAlC), et le N,N' m-phénylène dimaléimide. On peut aussi citer des monomère multi-substitué par des groupementsvinyliques, le butadiène, le chloroprène et l'isoprène. Les coagents de réticulations peuvent être utilisés à une teneur allant de 0,05 % à 30 %, en poids, par rapport au poids de la composition, préférentiellement de 0,1% à 10%.

D'autres adjuvants fonctionnels peuvent être utilisés dans la composition, tel que un ou plusieurs plastifiants, promoteurs d'adhésion, stabilisants UV et/ou absorbeurs UV, antioxydants, retardateurs de flamme, colorants/azurants, pigments et charges renforçantes ;
- dans cette dernière hypothèse, l'agent fonctionnel est présent dans ladite composition à une teneur allant de 0,05 % à 30 %, en poids, par rapport au poids de la composition, préférentiellement de 0,1% à 10%.

On notera que, dans la suite, l'invention est présentée, lorsqu'il y a un mélange de peroxydes, avec le peroxyde additionnel consistant en le OO-tert-butyle-O-2-éthyle hexyle monoperoxycarbonate (TBEC) mais il est bien entendu que la demanderesse a testé également le OO-tert-amyl-O-2ethyle hexyle monoperoxycarbonate (TAEC) et que ce dernier fonctionne de façon au moins aussi satisfaisante que le TBEC lorsqu'utilisé en mélange avec le TBIC ou TA-IPC.

La présente invention porte encore sur un procédé de fabrication d'un film de polymère réticulé caractérisé en ce qu'il comprend au moins les étapes suivantes :
- a°) extrusion sous forme de film d'une composition réticulable telle que définie ci-dessus,
- b°) réticulation de ladite composition réticulable après ladite étape a°) d'extrusion pendant une durée d'au plus vingt minutes, de préférence inférieure à quinze minutes.

### Description des Figures annexées

La description qui va suivre est donnée uniquement à titre illustratif et non limitatif en référence aux figures annexées, dans lesquelles :
- la figure 1 présente la densité de réticulation (XL) d'un film d'EVA en fonction du dosage pour différents peroxydes ;
- la figure 2 présente la résistivité (électrique) en volume (VR) pour différentes compositions, depuis l'EVA pur (non réticulé) jusqu'à des mélanges d'EVA ayant été réticulé avec TBEC et TBIC ;
- la figure 3 présente l'évolution du VR en fonction du dosage de TBIC ;
- la figure 4 présente l'évolution du VR en fonction du contenu en isododécane (solvant hydrocarboné classique pour les peroxydes) ;
- la figure 5 présente la résistivité en volume d'un polymère EVA réticulé par du TBIC en fonction du temps de réticulation ;
- la figure 6 présente l'évolution du VR en fonction du dosage du TBIC.

### Description détaillée de l'invention

S'agissant tant des peroxydes que du polymère préféré destiné à être réticulé, à savoir l'EVA, tous ces produits sont bien connus de l'homme du métier, tant au niveau de leur fabrication que de leur disponibilité dans le commerce.

On peut simplement noter les informations complémentaires suivantes concernant ces produits.

Des copolymères éthylène-acétate de vinyle (EVA) convenant à la présente invention sont par exemple les copolymères ethylène-acétate de vinyle vendus respectivement sous les dénominations commerciales « Evatane^{®} 24-03, 24-03 SA, 28-03, 28-05, 28-25, 28-40, 28-150, 28-420, 28-800, 33-15, 33-25, 33-45, 33-45 PV, 33-400, 34-50 PV », par la société ARKEMA. La teneur en acétate de vinyle des copolymères éthylène-acétate de vinyle convenant à la présente invention peut varier : par exemple, ces copolymères peuvent être à basse teneur en acétate de vinyle ou à haute teneur en acétate de vinyle.

Le OO-tert-butyle O-isopropyle monoperoxycarbonate se trouve commercialement vendu notamment par la demanderesse, sous l'appellation Luperox^{®} TBIC. A l'heure actuelle, on trouve ce peroxyde sous forme liquide jusqu'à des concentrations allant jusqu'à 77%, le solvant étant un hydrocarboné tels que par exemple l'isododécane. La demanderesse vend par exemple ce peroxyde sous l'appellation Luperox^{®} TBIC M75, c'est-à-dire présent à 75% dans de l'isododécane. Le fait que ce peroxyde ne se trouve pas fabriqué ou vendu sous forme pure ou quasi-pure est uniquement dû à des exigences sécuritaires (liées à sa thermo-sensibilité intrinsèque) susceptibles d'évoluer dans le temps. Dans la suite, les exemples testés sont réalisés avec du Luperox^{®} TBIC M75 mais il est bien entendu qu'en laboratoire a été testé des quantités supérieures de OO-tert-butyle O-isopropyle monoperoxycarbonate (au-delà de 75%) et que les résultats présentés avec ce produit ont été validé avec des taux différents (en particulier des taux de TBIC plus élevé qui ne sont pas repris ici dans les figures annexées).

Le OO-tert-butyle-O-(2-éthylhexyl) monoperoxycarbonate se trouve commercialement vendu notamment par la demanderesse, sous l'appellation Luperox^{®} TBEC. A l'heure actuelle, on trouve ce peroxyde classiquement sous forme pure (ou quasi-pure) voire dilué.

La préparation du polymère réticulé selon l'invention est tout à fait classique et bien connu de l'homme du métier. Le seul point à noter réside dans le fait que le temps de chauffage nécessaire à la réticulation est ici réduit, et qu'une quantité moindre de peroxyde est nécessaire pour atteindre les objectifs fixés, en particulier au regard du critère de résistivité en volume.

Notamment (mais non exclusivement) dans l'application du polymère réticulé selon l'invention à un encapsulant d'un module photovoltaïque, le film pourra comprendre un ou plusieurs adjuvants fonctionnels dans la composition à une hauteur maximum de 30% en poids de la composition et sera choisis plus particulièrement parmi les composés mentionnés ci-après ou un mélange de ces composés.

Un ou plusieurs coagents, ou promoteurs, de réticulation pourront être ajoutés à la composition selon l'invention afin d'améliore la densité et la cinétique de réticulation. Comme promoteur de réticulation de type aromatique multi-substitué, on peut citer le divinylbenzene, le diisopropenyl benzene, l'alpha methylstyrène, l'alpha-methylstyrene dimère et le trimellitate de triallyle. Comme promoteur de réticulation à base de méthacrylate multi-substitué, on peut citer l'ethylene glycol dimethacrylate, phenylene dimethacrylate, diethylene glycol dimethacrylate, triethylene glycol dimethacrylate, tetraethylene glycol dimethacrylate, le polyethylene glycol 200 dimethacrylate, polyethylene glycol 400 dimethacrylate, 1,3-butanediol dimethacrylate, 1,4-butanediol dimethacrylate, 1,6-hexanediol dimethacrylate, 1,12-dodecanediol dimethacrylate, 1,3-glycerol dimethacrylate, diurethane dimethacrylate et le trimethylolpropane trimethacrylate. Le promoteur de réticulation à base de méthacrylate multi-substitué est avantageusement utilisé, en particulier l'éthylène glycol dimethacrylate et le trimethylolpropane trimethacrylate. Comme promoteur de réticulation à base d'acrylate multi-substitué, on peut citer 5 le bisphenol A epoxy diacrylate, dipropylene glycol diacrylate, tripropylene glycol diacrylate, polyethylene glycol 600 diacrylate, ethylene glycol diacrylate, diethylene glycol diacrylate, triethylene glycol diacrylate, tetraethylene glycol diacrylate, neopentyl glycol ethoxylate diacrylate, butanediol diacrylate, hexanediol diacrylate, aliphatic urethane diacrylate, trimethylolpropane triacrylate, trimethylolpropane ethoxylate triacrylate, trimethylolpropane propoxylate triacrylate, glycerol propoxylate triacrylate, aliphatic urethane triacrylate, trimethylolpropane triacrylate et dipentaerythritol pentaacrylate. Comme promoteur de réticulation azotés, on peut citer le cyanurate de triallyle (TAC), l'isocyanurate de triallyle (TAlC), et le N,N' m-phénylène dimaléimide. On peut aussi citer des monomère multi-substitué par des groupements vinyliques, le butadiène, le chloroprène et l'isoprène.

Des plastifiants pourront aussi être ajoutés à la composition selon l'invention afin de faciliter la mise en oeuvre et améliorer la productivité du procédé de fabrication de la composition et des structures. On citera comme exemples les huiles minérales paraffiniques, aromatiques ou naphtaléniques qui permettent également d'améliorer le pouvoir d'adhérence de la composition selon l'invention. On peut également citer comme plastifiant les phtalates, azelates, adipates, le phosphate de ticrésyle.

De la même manière, des promoteurs d'adhésion, bien que non nécessaires, peuvent être avantageusement ajoutés afin d'améliorer le pouvoir d'adhérence de la composition lorsque celui-ci doit être particulièrement élevé. Le promoteur d'adhésion est un ingrédient non polymérique ; il peut être organique, cristallin, minéral et plus préférentiellement semi-minéral semiorganique. Parmi ceux-ci, on peut citer les titanates ou les silanes organiques, comme par exemple les monoalkyl titanates, les trichlorosilanes et les trialkoxysilanes. On pourra également prévoir que ces promoteurs d'adhésion sont directement greffés sur le premier ou le second copolymère par une technique bien connue de l'homme du métier, par exemple via l'extrusion réactive.

Le rayonnement UV étant susceptible d'entraîner un léger jaunissement des compositions thermoplastiques, des stabilisants UV et des absorbeurs UV (ces composés étant dénommés de manière générale des agents anti-UVs) tels que le benzotriazole, le benzophénone et les autres amines encombrés, peuvent être ajoutés dans certaines applications où un tel phénomène doit être évité. Ces composés peuvent être par exemple à base de benzophénone ou de benzotriazole. On peut les ajouter dans des quantités inférieures à 10% en masse de la masse totale de la composition et préférentiellement de 0,1 à 5%.

On pourra également ajouter des antioxydants pour limiter le jaunissement lors de la fabrication de la composition tels que les composés phosphorés (phosphonites et/ou phosphites) et les phénoliques encombrés. On peut ajouter ces antioxydants dans des quantités inférieures à 10% en masse de la masse totale de la composition et préférentiellement de 0,05 à 5%. Un agent antioxydant préféré dans le cadre de la présente invention peut par exemple consister en la (1,2 - dihydro-2,2,4-triméthylquinoline), connu sous l'abréviation TMQ.

De la même manière, dans certaines applications, des agents retardateurs de flamme peuvent également être ajoutés à la composition selon l'invention. Ces agents peuvent être halogénés ou non-halogénés. Parmi les agents halogénés, on peut citer les produits bromés. On peut également utiliser comme agent non-halogéné les additifs à base de phosphore tels que le polyphosphate d'ammonium, les phosphinates et phosphonates d'aluminium, le cyanurate de mélamine, le pentaérythritol, les zéolithes ainsi que les mélanges de ces agents. La composition peut comprendre ces agents dans des proportions allant typiquement de 3 à 30% par rapport à la masse totale de la composition. On pourra également ajouter des composés colorants ou azurants.

On peut également ajouter à la composition des pigments comme par exemple du dioxyde de titane ou de l'oxyde de zinc dans des proportions allant généralement de 5 à 10% par rapport à la masse totale de la composition.

On peut également ajouter à la composition des charges renforçantes telles que le talc, les fibres de verre, les fibres de carbone, les montmorillonites, les nanotubes de carbone, le noir de carbone, dans des proportions allant généralement de 2,5 à 30%, plus préférentiellement jusqu'à 10%, par rapport à la masse totale de la composition.

### Matériaux employés pour constituer les formulations testées :

**TBEC** signifie le OO-tert-butyle-O-2-éthyle hexyle monoperoxycarbonate. Comme présenté précédemment, il est fourni dans les exemples illustrant la présente demande par du Luperox^{®} TBEC fabriqué et vendu par la demanderesse.

**TBIC** signifie le OO-tert-butyle O-isopropyle monoperoxycarbonate. Comme présenté précédemment, il est fourni dans les exemples illustrant la présente demande par du Luperox^{®} TBIC M75, à savoir que le TBIC est présent à 75% dans une solution d'isododécane. Dans les différentes figures, reprises de certains des tests réalisés par la demanderesse, le TBIC notamment est annoté avec un indice de dilution variable, notamment à 40%, 50% ou 60% ce qui correspond respectivement à une abréviation M40, M50 et M60.

**P** signifie le tert-butylperoxybenzoate (peroxyde) et est vendu classiquement pur. Il est commercialisé par la demanderesse sous l'appellation Luperox^{®} P.

**101** signifie le 2,5-diméthyle-2,5-di(tert-butyleperoxy)hexane et est vendu classiquement pur ou quasi-pur. Ce peroxyde est vendu par la demanderesse sous l'appellation Luperox^{®} 101.

**270** signifie tert-butyleperoxy-3,5,5-triméthylehexanoate et est vendu classiquement pur ou quasi-pur. Ce peroxyde est vendu par la demanderesse sous l'appellation Luperox^{®} 270.

**531 M80** signifie le 1,1-di(tert-amyl peroxy)-cyclohexane dilué à 80% dans de l'isododécane par exemple. Ce peroxyde est vendu par la demanderesse sous l'appellation Luperox^{®} 531M80.

**331 M50** signifie le 1,1-di(tert-butylperoxy)-cyclohexane dilué à 50% dans de l'isododécane par exemple. Ce peroxyde est vendu par la demanderesse sous l'appellation Luperox^{®} 331M50.

**JWEB50** signifie le polyéther poly(t-butyle)-peroxycarbonate dilué à 50% dans l'éthyle benzène par exemple. Ce peroxyde est vendu par la demanderesse sous l'appellation Luperox^{®} JWEB50.

**EVA** signifie un copolymère éthylène-acétate de vinyle. On utilise un même type d'EVA pour toutes les expérimentations et tests afin de s'assurer que les résultats ne sont pas fonction du type d'EVA utilisé. A titre d'exemple, comme évoqué précédemment, on citera EVATANE^{®} 18-150 vendu par la demanderesse et qui consiste en un EVA avec 18% de Vinyl Acetate et 150 comme valeur de Melt Flow Index (MFI) mesuré selon la norme ASTM 1238 ou bien l'EVATANEO 40-55 vendu par la demanderesse et qui consiste en un EVA avec 40% de Vinyl Acetate et 55 comme valeur de Melt Flow Index (MFI) mesuré selon la norme ASTM 1238.

### Tests réalisés et résultats :

Dans toutes les figures, le terme « phr » signifie « per hundred resin » autrement dit « par centaine de résine ». Ainsi, à titre d'exemple, si l'on considère 1 phr pour un peroxyde donné, cela signifie que, dans la composition testée, il y a présent 1 unité (en poids) de ce peroxyde pour 100 unités du polymère à réticuler.

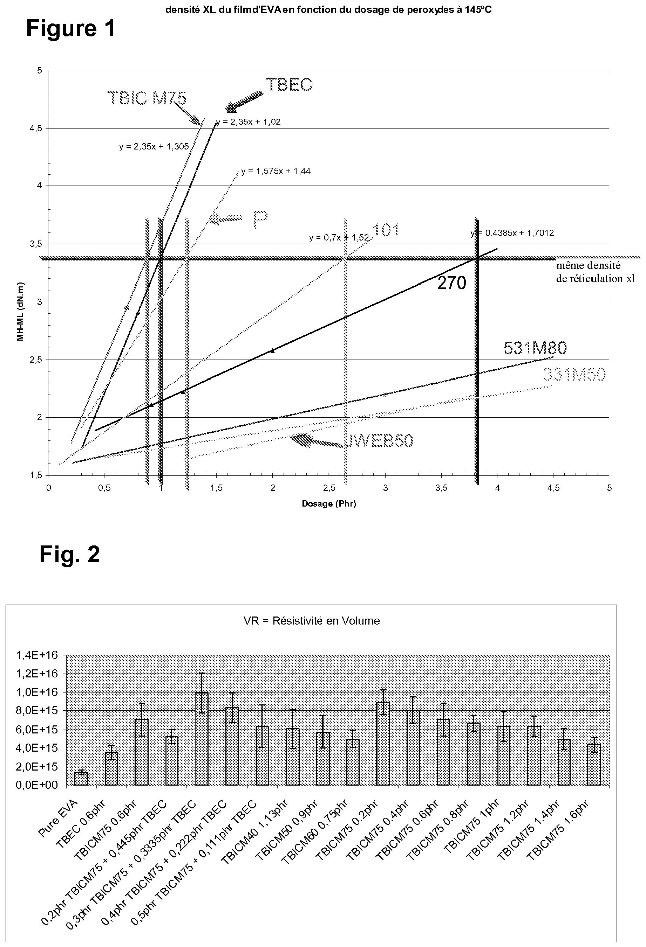

La figure 1 présente les mesures de densité de réticulation d'un EVA par un peroxyde.

On considère le TBEC comme la référence pour une réticulation à 3,38 dN.m pour 1 phr. On constate que, vis-à-vis de ce peroxyde TBEC classiquement utilisé pour réticuler l'EVA, les autres peroxydes classiques P, 101, 270, 531M80, 331M50 et JWEB50 doivent être présents en quantités supérieures, voire très (très) supérieures pour obtenir le même niveau de réticulation que pour le TBEC.

Seul le TBIC, pour obtenir le même niveau de réticulation, nécessite une quantité moindre, soit en l'espèce 0,9 phr. Ainsi, l'utilisation du TBIC permet de réduire les coûts (du fait d'une quantité moindre) ainsi que le niveau de composés organiques volatiles provenant de la décomposition du peroxyde même dans l'EVA réticulé.

La figure 2 permet de tirer deux conclusions principales. Tout d'abord, le TBIC utilisé en très faible quantité (0,2 phr) permet d'augmenter drastiquement la résistivité en volume du polymère réticulé et que le TBIC seul présente des résultats bien meilleur que le TBEC seul. Enfin, on notera également qu'un mélange quasi-équivalent (50-50) de TBIC et de TBEC présente un effet synergique puisque les résultats observés sur ce test VR sont les meilleurs.

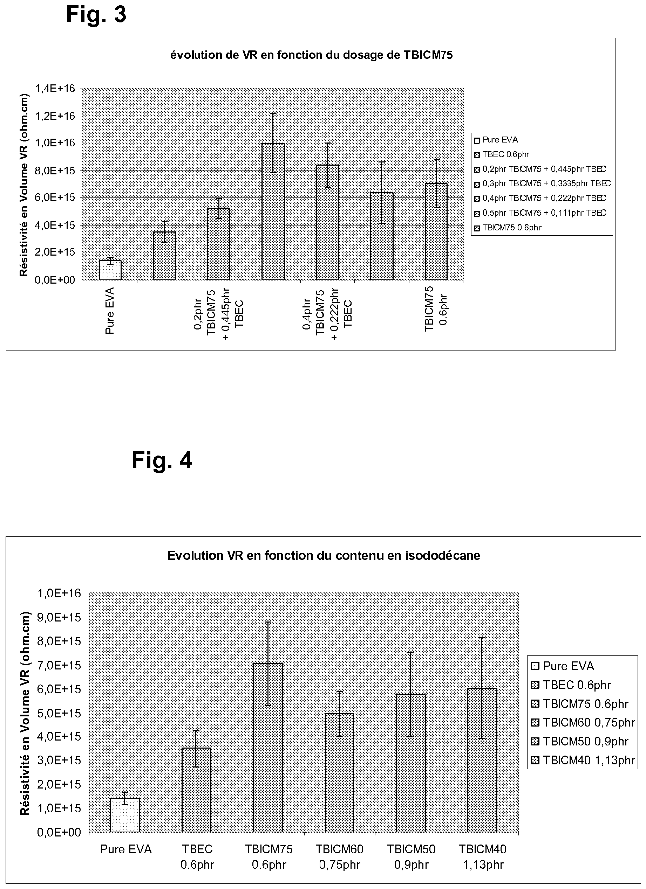

La figure 3 confirme la conclusion que le mélange TBIC et TBEC, dans des proportions respectives spécifiques, présente les meilleurs résultats sur le test VR.

La figure 4 permet d'établir en particulier que le diluant ou solvant, en l'espèce l'isododécane, n'a pas d'impact sur la mesure de résistivité en volume.

On notera ici que le solvant utilisé pour le TBIC est l'isododécane mais que d'autres solvants organiques ont été testés et que les résultats sont identiques ou quasiment identiques à ceux présentés ici.

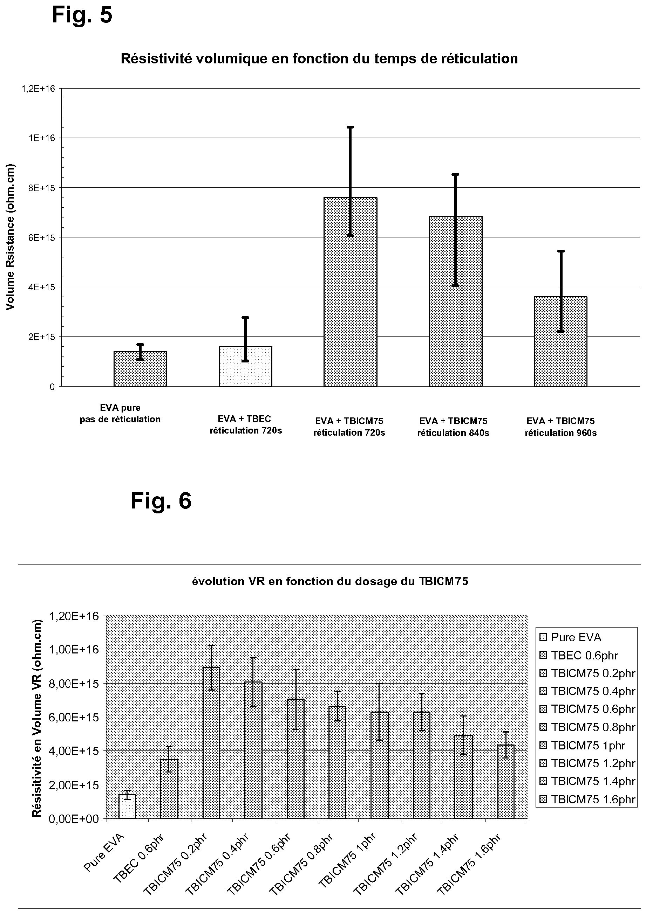

La figure 5 permet principalement d'établir le fait que le TBIC réalise une réticulation rapide du polymère et que plus le temps de réticulation est court, plus le niveau de résistivité en volume est élevé, ce qui permet un dosage précis du niveau de résistivité en volume désiré pour le polymère à réticuler.

On notera ici que, bien que tous les essais et tests présentés dans le cadre de cette demande de brevet ont été réalisé avec de l'EVA, de nombreux autres polymères usuellement réticulés ont été testés en mélange avec l'EVA (dans une fraction de ce dernier parfois faible voire très faible), voire sans EVA (remplacé par un autre polymère), et présentent tous des résultats et des conclusions (quant au TBIC) identiques ou quasi-identiques.

La figure 6 montre à nouveau que de faibles quantités de TBIC permettent d'obtenir les meilleurs résultats sur le test VR.

Il est bien entendu ici que la quantité de TBIC définie comme des domaines préférés, ou encore plus préférés, est fonction certes de ce résultat sur le test VR mais également d'autres paramètres tels qu'en particulier les propriétés thermomécaniques du polymère réticulé.

## Revendications

1. Utilisation de peroxyde(s) pour la réticulation d'au moins un polymère, ledit polymère consistant en un homopolymère ou copolymère de l'éthylène et en particulier le copolymère ethylène-acétate de vinyle (EVA) ou un mélange de l'EVA avec un autre homo- ou copolymère de l'éthylène, **caractérisée en ce que** le peroxyde consiste en un mélange de OO-tert-butyle O-isopropyle monoperoxycarbonate et de OO-tert-butyle-O-2-éthyle hexyle monoperoxycarbonate ou OO-tert-amyl-O-2ethyle hexyle monoperoxycarbonate, ou de OO-tert-amyl O-isopropyl monoperoxycarbonate et de OO-tert-butyle-O-2-éthyle hexyle monoperoxycarbonate ou OO-tert-amyl-O-2éthyle hexyle monoperoxycarbonate dans un rapport massique de 40%-60% à 60%-40% de ces deux peroxydes formant ledit mélange, et de façon encore plus préférentielle dans un rapport massique de 45%-55% à 55%-45% de ces deux peroxydes formant ledit mélange.

2. Utilisation selon la revendication 1, **caractérisée en ce que** le OO-tert-butyle O-isopropyle monoperoxycarbonate ou le OO-tert-amyl O-isopropyl monoperoxycarbonate se présente sous forme dilué, de préférence présent en quantité supérieure à 50% dans la dilution, de façon encore plus préférée présent en quantité supérieure à 60% dans la dilution.

3. Composition réticulable comprenant au moins un copolymère éthylène-acétate de vinyle (EVA) et au moins un peroxyde, **caractérisée en ce que** le peroxyde consiste en un mélange du OO-tert-butyle O-isopropyle monoperoxycarbonate ou du OO-tert-amyl O-isopropyl monoperoxycarbonate ainsi que du OO-tert-butyle-O-2-éthyle hexyle monoperoxycarbonate ou du OO-tert-amyl-O-2ethyle hexyle monoperxoycarbonate dans un rapport massique de 40%-60% à 60%-40% de ces deux peroxydes, et de façon encore plus préférentielle dans un rapport massique de 45%-55% à 55%-45% de ces deux peroxydes.

4. Composition réticulable selon la revendication 3, **caractérisée en ce que** le peroxyde consiste en un mélange de OO-tert-butyle O-isopropyle monoperoxycarbonate ou de OO-tert-amyl O-isopropyl monoperoxycarbonate et de OO-tert-butyle-O-2-éthyle hexyle monoperoxycarbonate ou du OO-tert-amyl-O-2ethyle hexyle monoperxoycarbonate (TAEC), dans un rapport massique de 40% à 60% de ces deux peroxydes formant ledit mélange, de façon encore préférentielle dans un rapport massique de 45% à 55% de ces deux peroxydes formant ledit mélange.

5. Composition réticulable selon la revendication 4, **caractérisée en ce que** le mélange de peroxyde représente entre 0,2% et 4%, de préférence entre 0,5% et 2,5%, de la quantité massique du polymère présent dans ladite composition.

6. Composition réticulable selon l'une quelconque des revendications 3 à 5, **caractérisée en ce que** ledit copolymère éthylène-acétate de vinyle (EVA) est présent dans ladite composition à une teneur allant de 70 à 99,9%, de préférence de 97 à 99%, en poids, par rapport au poids de la composition.

7. Composition réticulable selon la revendication 3, **caractérisée en ce qu'**elle comprend en outre un ou plusieurs coagents, ou promoteurs, de réticulation.

8. Composition réticulable selon la revendication précédente, **caractérisée en ce que** ledit agent fonctionnel est présent dans ladite composition à une teneur allant de 0,05 % à 30 %, en poids, par rapport au poids de la composition, préférentiellement de 0,1% à 10%.

9. Procédé de fabrication d'un film de polymère réticulé **caractérisé en ce qu'**il comprend au moins les étapes suivantes :
- a°) extrusion sous forme de film d'une composition réticulable selon l'une quelconque des revendications 3 à 8,
- b°) réticulation de ladite composition réticulable après ladite étape a°) d'extrusion pendant une durée d'au plus vingt minutes, de préférence inférieure à quinze minutes.

## Patentansprüche

1. Verwendung von Peroxid(en) zur Vernetzung von mindestens einem Polymer, wobei das Polymer aus einem Ethylen-Homopolymer oder -Copolymer und insbesondere dem Ethylen-Vinylacetat(EVA)-Copolymer oder einer Mischung von EVA mit einem anderen Ethylen-Homopolymer oder -Copolymer besteht, **dadurch gekennzeichnet, dass** das Peroxid aus einer Mischung von OO-tert-Butyl-O-isopropylmonoperoxycarbonat und von OO-tert-Butyl-O-2-ethylhexylmonoperoxycarbonat oder OO-tert-Amyl-O-2-ethylhexylmonoperoxycarbonat oder von OO-tert-Amyl-O-isopropylmonoperoxycarbonat und von OO-tert-Butyl-O-2-ethylhexylmonoperoxycarbonat oder OO-tert-Amyl-O-2-ethylhexylmonoperoxycarbonat in einem Massenverhältnis von 40 %-60 % bis 60 %-40 % dieser beiden die Mischung bildenden Peroxide und noch weiter bevorzugt in einem Massenverhältnis von 45 %-55 % bis 55 %-45 % dieser beiden die Mischung bildenden Peroxide besteht.

2. Verwendung nach Anspruch 1, **dadurch gekennzeichnet, dass** das OO-tert-Butyl-O-isopropylmonoperoxycarbonat oder das OO-tert-Amyl-O-isopropylmonoperoxycarbonat in verdünnter Form, vorzugsweise in einer Menge von mehr als 50 % in der Verdünnung, noch weiter bevorzugt in einer Menge von mehr als 60 % in der Verdünnung, vorliegt.

3. Vernetzbare Zusammensetzung, umfassend mindestens ein Ethylen-Vinylacetat(EVA)-Copolymer und mindestens ein Peroxid, **dadurch gekennzeichnet, dass** das Peroxid aus einer Mischung von OO-tert-Butyl-O-isopropylmonoperoxycarbonat oder von OO-tert-Amyl-O-isopropylmonoperoxycarbonat sowie von OO-tert-Butyl-O-2-ethylhexylmonoperoxycarbonat oder von OO-tert-Amyl-O-2-ethylhexylmonoperoxycarbonat in einem Massenverhältnis von 40 %-60 % bis 60 %-40 % dieser beiden Peroxide und noch weiter bevorzugt in einem Massenverhältnis von 45 %-55 % bis 55 %-45 % dieser beiden Peroxide besteht.

4. Vernetzbare Zusammensetzung nach Anspruch 3, **dadurch gekennzeichnet, dass** das Peroxid aus einer Mischung von OO-tert-Butyl-O-isopropylmonoperoxycarbonat oder von OO-tert-Amyl-O-isopropylmonoperoxycarbonat und von OO-tert-Butyl-O-2-ethylhexylmonoperoxycarbonat oder von OO-tert-Amyl-O-2-ethylhexylmonoperoxycarbonat (TAEC) in einem Massenverhältnis von 40 % bis 60 % dieser beiden die Mischung bildenden Peroxide und noch weiter bevorzugt in einem Massenverhältnis von 45 % bis 55 % dieser beiden die Mischung bildenden Peroxide besteht.

5. Vernetzbare Zusammensetzung nach Anspruch 4, **dadurch gekennzeichnet, dass** die Peroxidmischung zwischen 0,2 % und 4 % und vorzugsweise zwischen 0,5 % und 2,5 % der Massenmenge des in der Zusammensetzung vorliegenden Polymers ausmacht.

6. Vernetzbare Zusammensetzung nach einem der Ansprüche 3 bis 5, **dadurch gekennzeichnet, dass** das Ethylen-Vinylacetat(EVA)-Copolymer in der Zusammensetzung in einem Gehalt im Bereich von 70 bis 99,9 Gew.-%, vorzugsweise 97 bis 99 Gew.-%, bezogen auf das Gesamtgewicht der Zusammensetzung, vorliegt.

7. Vernetzbare Zusammensetzung nach Anspruch 3, **dadurch gekennzeichnet, dass** sie außerdem ein oder mehrere Vernetzungcoagentien oder -promotoren umfasst.

8. Vernetzbare Zusammensetzung nach dem vorhergehenden Anspruch, **dadurch gekennzeichnet, dass** das funktionelle Mittel in der Zusammensetzung in einem Gehalt im Bereich von 0,05 bis 30 Gew.-%, vorzugsweise 0,1 bis 10 Gew.-%, bezogen auf das Gewicht der Zusammensetzung, vorliegt.

9. Verfahren zur Herstellung eines Films aus vernetztem Polymer, **dadurch gekennzeichnet, dass** es mindestens die folgenden Schritte umfasst:
- a°) Extrudieren einer vernetzbaren Zusammensetzung nach einem der Ansprüche 3 bis 8 in Filmform,
- b°) Vernetzen der vernetzbaren Zusammensetzung nach dem Extrusionsschritt a°) über einen Zeitraum von höchstens zwanzig Minuten, vorzugsweise weniger als fünfzehn Minuten.

## Claims

1. Use of peroxide (s) for crosslinking at least one polymer, said polymer consisting of an ethylene homopolymer or copolymer and in particular the ethylene-vinyl acetate (EVA) copolymer or a mixture of EVA with another ethylene homopolymer or copolymer, **characterized in that** the peroxide consists of a mixture of OO-tert-butyl O-isopropyl monoperoxycarbonate and of OO-tert-butyl 0-2-ethylhexyl monoperoxycarbonate or 00-tert-amyl 0-2-ethylhexyl monoperoxycarbonate, or of OO-tert-amyl O-isopropyl monoperoxycarbonate and of 00-tert-butyl O-2-ethylhexyl monoperoxycarbonate or 00-tert-amyl O-2-ethylhexyl monoperoxycarbonate in a mass ratio of from 40%/60% to 60%/40% of these two peroxides forming said mixture, and even more preferentially in a mass ratio of from 45%/55% to 55%/45% of these two peroxides forming said mixture.

2. Use according to claim 1, **characterized in that** OO-tert-butyl O-isopropyl monoperoxycarbonate or OO-tert-amyl O-isopropyl monoperoxycarbonate is in dilute form, preferably present in an amount of greater than 50% in the dilution, and even more preferably present in an amount of greater than 60% in the dilution.

3. Crosslinkable composition comprising at least one ethylene-vinyl acetate (EVA) copolymer and at least one peroxide, **characterized in that** the peroxide consists of a mixture of OO-tert-butyl O-isopropyl monoperoxycarbonate or of OO-tert-amyl O-isopropyl monoperoxycarbonate and of OO-tert-butyl 0-2-ethylhexyl monoperoxycarbonate or of OO-tert-amyl 0-2-ethylhexyl monoperoxycarbonate in a mass ratio of from 40%/60% to 60%/40% of these two peroxides, and even more preferentially in a mass ratio of from 45%/55% to 55%/45% of these two peroxides.

4. Crosslinkable composition according to claim 3, **characterized in that** the peroxide consists of a mixture of OO-tert-butyl O-isopropyl monoperoxycarbonate or of OO-tert-amyl O-isopropyl monoperoxycarbonate and of OO-tert-butyl 0-2-ethylhexyl monoperoxycarbonate or of OO-tert-amyl 0-2-ethylhexyl monoperoxycarbonate (TAEC), in a mass ratio of from 40% to 60% of these two peroxides forming said mixture, more preferentially in a mass ratio of 45% to 55% of these two peroxides forming said mixture.

5. Crosslinkable composition according to claim 4, **characterized in that** the peroxide mixture represents between 0.2% and 4% and preferably between 0.5% and 2.5% of the mass amount of the polymer present in said composition.

6. Crosslinkable composition according to any one of claims 3 to 5, **characterized in that** said ethylene-vinyl acetate (EVA) copolymer is present in said composition in a content ranging from 70% to 99.9% and preferably from 97% to 99% by weight relative to the weight of the composition.

7. Crosslinkable composition according to claim 3, **characterized in that** it also comprises one or more crosslinking coagents or promoters.

8. Crosslinkable composition according to the preceding claim, **characterized in that** said functional agent is present in said composition in a content ranging from 0.05% to 30% by weight and preferentially from 0.1% to 10% by weight relative to the weight of the composition.

9. Process for manufacturing a film of crosslinked polymer, **characterized in that** it comprises at least the following steps:
- a°) extrusion in the form of a film of a crosslinkable composition according to any one of claims 3 to 8,
- b°) crosslinking of said crosslinkable composition after said extrusion step a°) for a time of not more than twenty minutes, preferably less than fifteen minutes.
